# EUROPÄISCHE PATENTSCHRIFT

(11) **EP 2 052 597 B1**
(45) Veröffentlichungstag und Bekanntmachung des Hinweises auf die Patenterteilung: **23.02.2011**
(21) Anmeldenummer: 08018142.3
(22) Anmeldetag: 16.10.2008
(51) Int. Cl.: A01F 15/07

(54) **Vorrichtung zum Umwickeln von Körpern mit einer Folienbahn**
Device for covering bodies with a sheet of film
Dispositif d'enroulement de corps à l'aide d'une bande de film

(30) Priorität: 27.10.2007 DE 102007051491
(43) Veröffentlichungstag der Anmeldung: 29.04.2009
(73) Patentinhaber: Welger Maschinenfabrik GmbH, D-38304 Wolfenbüttel (DE)
(72) Erfinder: Schlichting, Malte, 38543 Hillerse (DE)

(56) Entgegenhaltungen:
- EP-A- 1 386 532
- EP-A- 1 607 331
- DE-U1- 9 414 220

## Beschreibung

Die Erfindung betrifft eine Vorrichtung zum Umwickeln von Körpern mit einer Folienbahn, bestehend aus wenigstens einem im oberen Bereich eines Tragrahmens gelagerten, rotierend antreibbaren Wickelarm, welcher an seinem Armende eine Folienvorratsrolle trägt und einer am Tragrahmen angeordneten Klemmhalterung für den Anfang der Folienbahn.

Eine derartige Vorrichtung lässt sich beispielsweise dem deutschen Gebrauchsmuster Nr. 94 14 220.3 U1 entnehmen.

Um die Folienbahn am Ende eines Wickelvorganges abzutrennen und für den nächsten Wickelvorgang, d.h. den nächsten Körper, festzuklemmen, wird hierbei ein Fangarm bei noch rotierendem Wickelarm in den Wickelarmumlaufkreis geschwenkt. Die Folienbahn läuft gegen den aufgerichteten Fangarm und wird durch Absenken des Fangarmes auf eine horizontale, ortsfeste Klemmeinrichtung gedrückt und durch den Fangarm festgehalten. Gleichzeitig wird die Folienbahn an einer Schneideinrichtung entlanggeführt, um die Folienbahn vom fertig gewickelten Körper abzutrennen.

Um den Anfang der Folienbahn beim nächsten Wickelvorgang freizugeben, wird der Fangarm nach erneutem Wickelarmumlauf während des rotierenden Wickelarmes kurz ein oder mehrmals geöffnet.

Diese Vorrichtung weist folgende Nachteile auf:
Da das Öffnen und Schließen bzw. Absenken des Fangarmes zu Kollisionen mit den Wickelarmbauteilen führt, wird die Drehzahl des Wickelarmes sowohl beim Öffnen (Folienfreigabe) und Absenken (Folienklemmung) des Fangarmes erheblich reduziert. Das Verzögern und Beschleunigen des Wickelarmes führt zu einem Zeitverlust beim gesamten Wickelvorgang. Der Fangarm muss hydraulisch bewegt werden, während auch der Wickelarm hydraulisch angetrieben wird. Hiermit ist eine relativ komplexe hydraulische Verschaltung verbunden, da sich zwei Verbraucher, die kollisionsgefährdet sind, unabhängig voneinander bewegen müssen. Darüber hinaus wird die Folienbahn in der relativ weit vom Körper entfernten Klemmeinrichtung festgehalten, was ein relativ langes, loses Folienende am Körper zur Folge hat, welches beispielsweise durch Wind auch vorhergehende Windungen ablösen kann.

Der Erfindung liegt die Aufgabe zugrunde, die eingangs beschriebene Vorrichtung zu verbessern. Diese Aufgabe wird durch die im kennzeichnenden Teil des Patentanspruches 1 aufgeführten Merkmale gelöst. Hinsichtlich der weiteren Ausgestaltung der Erfindung wird auf die Ansprüche 2 bis 10 verwiesen.

Durch die erfindungsgemäße Ausgestaltung der Vorrichtung wird gewährleistet, dass die gesamte Klemmhalterung nicht während der rotierenden Wickelarmbewegung in den Umlaufkreis des Wickelarmes bewegt werden muss, was eine Kollision von Wickelarm und Klemmhalterung ausschließt. Der Zeitverlust durch die Folienfreigabe bzw. Folienklemmung entfällt, da der Wickelarm nicht verlangsamt werden muss. Der Zeitverlust, durch die nun nach dem Wickeln nötige Bewegung der Klemmelemente ist vernachlässigbar klein. Die Wickelqualität ist gleichmäßiger und damit besser, weil fast nur mit der Wickelarmnenndrehzahl gewickelt wird.

In weiterer Ausgestaltung ist vorgesehen, dass die Klemmhalterung zwei geradlinig verschiebbare Klemmelemente aufweist, die so ausgebildet und angeordnet sind, dass die Folienbahn von oben und unten zur Mitte zusammenraffbar und dort festklemmbar ist. Das ist zeitsparend, schafft eine günstige Voraussetzung für das Abtrennen der Folienbahn und ermöglicht sehr kurze lose Folienenden, da die Folienbahn in Ausgestaltung nach Anspruch 4 dicht am Körper getrennt werden kann.

Die erfindungsgemäße Klemmhalterung kann sowohl in Drehrichtung des Dreharmes gegen die dem Körper abgewandte Seite der Folienbahn zur Anlage gebracht werden oder wie der Fangarm beim Stand der Technik gegen die zwischen Körper und Klemmhalterung gespannte Innenseite der Folienbahn zur Anlage gebracht werden. Besonders bei Doppelwickelarmen kann die Folienbahnseite an der Innenseite und die andere Folienbahn an der Außenseite beaufschlagt werden, was eine sehr kompakte Bauart der gesamten Vorrichtung ergibt.

In der Zeichnung ist eine als Beispiel dienenden Ausführungsform der Erfindung schematisch dargestellt. Es zeigen:
Fig. 1 eine Draufsicht auf eine erfindungsgemäße Vorrichtung mit einer Klemmhalterung in horizontaler Ruheposition und ausgefahrenen Klemmelementen während eines Wickelvorganges,
Fig. 2 eine Seitenansicht auf die Vorrichtung gemäß Figur 1, wobei die Vorspannrollen der Folienbahn übersichtshalber weggelassen sind,
Fig. 3 eine Draufsicht auf eine Vorrichtung gemäß Figur 1 und 2 in vertikaler Stellung der Klemmhalterung,
Fig. 4 eine Seitenansicht auf die Vorrichtung gemäß Figur 3, wobei die Vorspannwalzen der Folienbahn zur besseren Veranschaulichung weggelassen und in gestrichelter Linie die mittels der Klemmelemente in der Mitte zusammengeraffte Folienbahn dargestellt ist und
Fig. 5 eine Ansicht gemäß Figur 4 in horizontaler Ruhestellung der Klemmhalterung und festgeklemmtem Anfang der Folienbahn in Bereitschaft für die Umwicklung des nächsten Körpers.

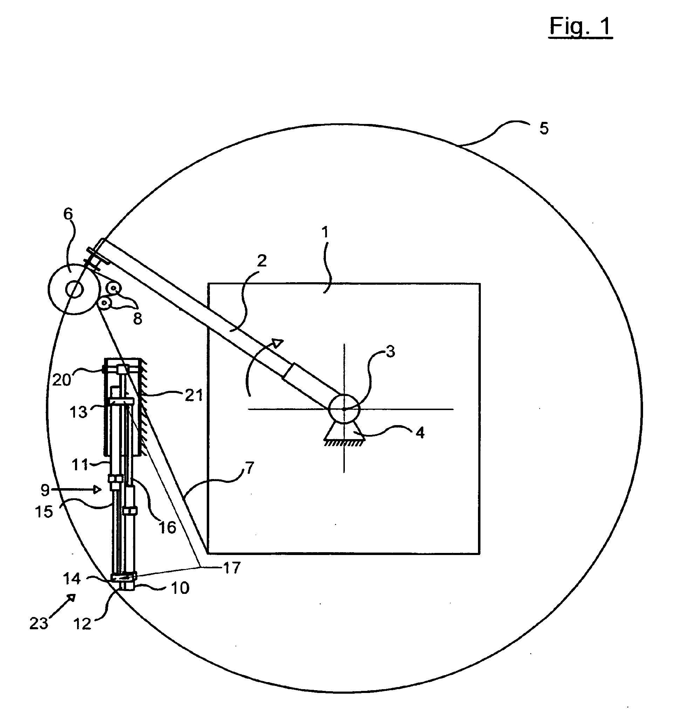

Hinsichtlich des Aufbaues und der Wirkungsweise einer vorbekannten Ballenumwickelvorrichtung mit einer Klemmhalterung kann z.B. auf das deutsche Gebrauchsmuster Nr. G 94 14 220.3 verwiesen werden. Von einer derartigen Ballenwickelvorrichtung zeigt Fig. 1 in Draufsicht beispielsweise einen Rundballen 1 aus vorgewelktem Gras während eines Wickelvorganges. Ein Wickelarm 2 ist um eine vertikale Achse 3 rotierend antreibbar im oberen Bereich eines ortsfesten Tragrahmens 4 gelagert und beschreibt während des Umlaufes eine Kreisbahn 5. Der Wickelarm 2 trägt an seinem Ende eine Folienvorratsrolle 6, von welcher eine Folienbahn 7 abgezogen und um den Ballen 1 gewickelt wird. Zur Vorreichung der Folie sind zwischen Ballen 1 und Folienvorratsrolle 6 zwei Stretchwalzen 8 angeordnet.

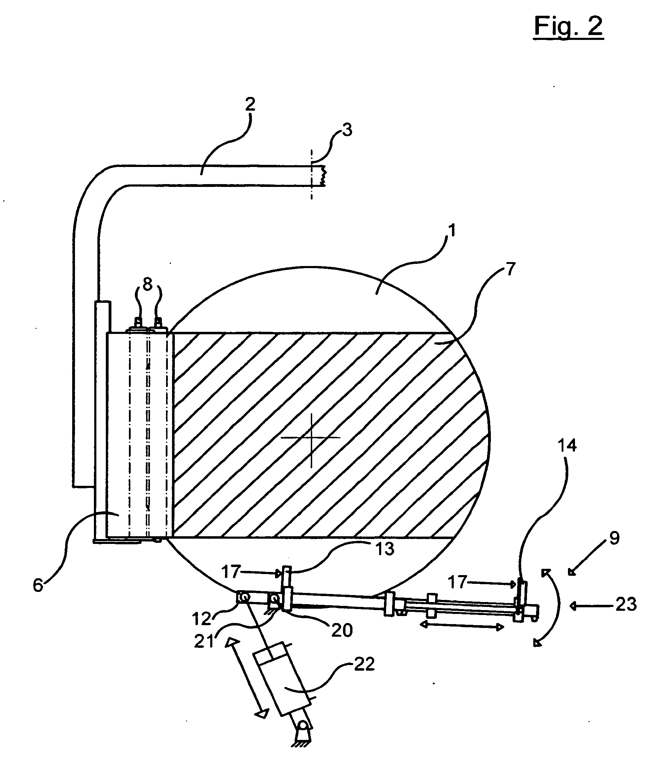

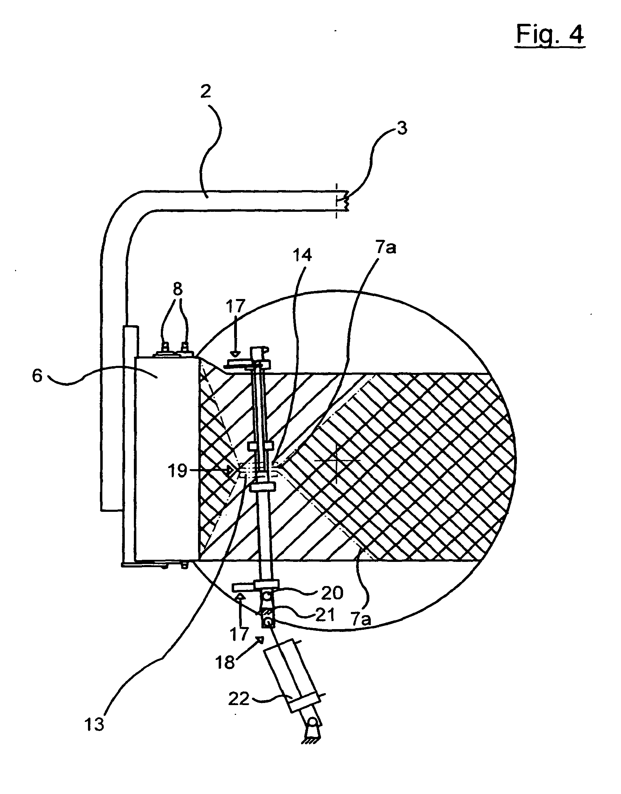

Neu ist eine unterhalb des Drehbereiches des Wickelarmes 2 angeordnete Klemmhalterung 9, siehe Fig. 1 und 2. Die Klemmhalterung 9 weist zwei mittels doppeltwirkender Hydraulikzylinder 10, 11 auf einem Schwenkrahmen 12 gradlinig verfahrbare Klemmplatten 13, 14 für die Folienbahn 7 auf. Jede Klemmplatte ist am Ende der Kolbenstange 15, 16 befestigt. Die Anordnung und Ausbildung der Klemmhalterung 9 ist so gewählt, dass die Klemmplatten 13, 14 in ihrer ausgefahrenen Stellung 17 einen Abstand voneinander aufweisen, der größer ist als die Breite der Folienbahn 7, so dass die Klemmplatten 13, 14 in vertikaler Stellung 18 der Klemmhalterung 9, (siehe Figur 4) die gespannte Folienbahn 7 oben und unten übergreifen. Andererseits ist die Anordnung und Ausbildung der Klemmhalterung 9 so gestaltet, dass die Klemmplatten 13, 14 gleichzeitig aus ihrer ausgefahrenen Stellung 17 zur Mitte hin gegeneinander in eine Klemmstellung 19 verfahrbar sind, um zwischen sich eine zusammengeraffte Folienbahn 7a festzuklemmen.

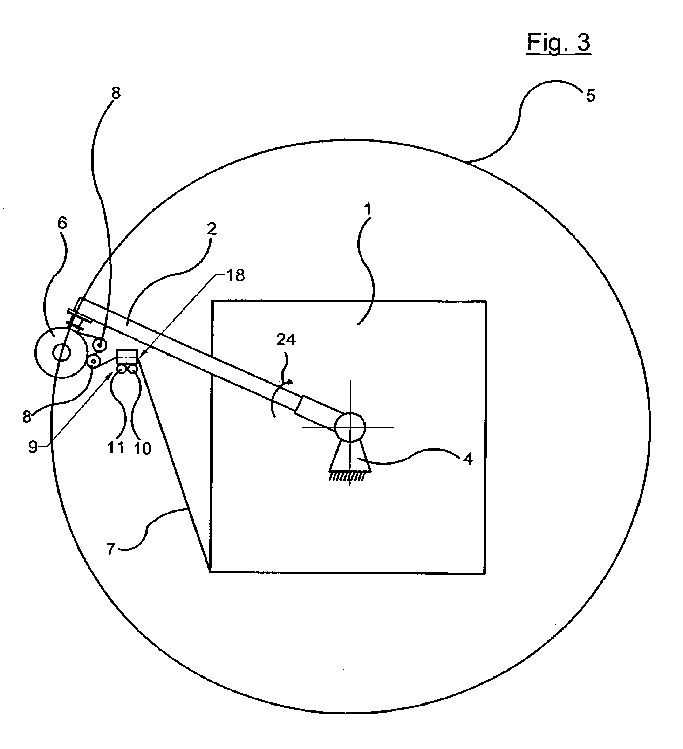

Die Klemmhalterung 9 ist um eine horizontale Drehachse 20 schwenkbar am gestellfestem Tragrahmen 21 gelagert und mittels einer horizontalen Ruhestellung 23, siehe Fig. 1, 2 in eine vertikale Stellung 18 verschwenkbar, siehe Fig. 3 und 4 in der die gespannte Folienbahn 7 an der Klemmhalterung 9 oder an nicht gezeigten Führungsrollen für die Folienbahn 7 anliegt, die die Folienbahn 7 auf Abstand zum Rahmen 12 halten und beispielsweise der Breite der Folie entsprechende, freidrehbare Rohre sein können. Der Klemmhalterung 9 ist außerdem ein nicht gezeigtes ortsfestes oder antreibbares Schneidelement zugeordnet.

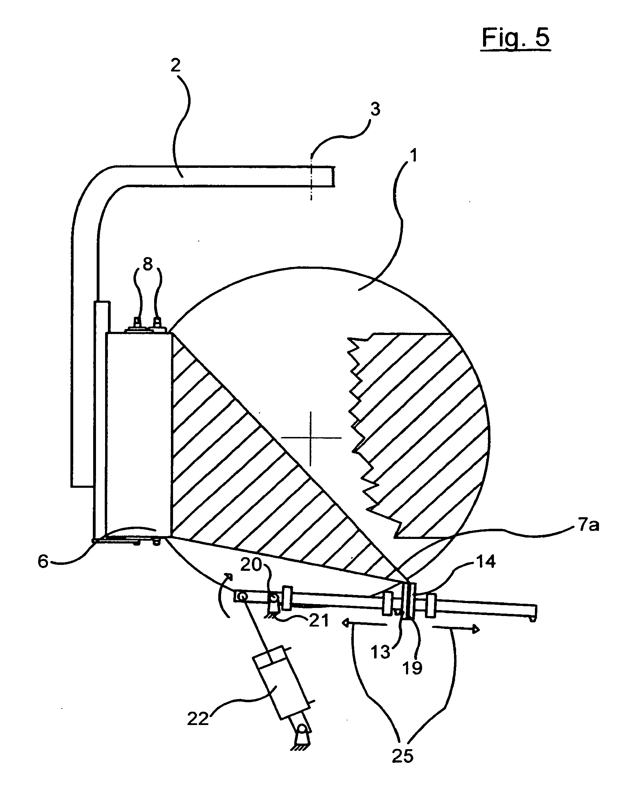

Die Arbeitsweise der Vorrichtung ist wie folgt:
Während des Wickelvorganges, siehe Figur 1, befindet sich die Klemmhalterung 9 in horizontaler Ruhestellung 23 und die Klemmplatten 13, 14 sind in ausgefahrener Position 17. Zur Beendigung des Wickelvorganges wird der Wickelarm 2 schlagartig von seiner Nenndrehzahl abgebremst, dass sich die gespannte Folienbahn 7 im Bereich der Drehzahl 20 befindet. Die Klemmhalterung9 wird nun um 90° in den Bereich der zwischen Ballen 1 und Folienvorratsrolle 6 gespannten Folienbahn 9 geschwenkt. Mittels der beiden Hydraulikzylinder 10, 11 wird dann die Folienbahn 7a zwischen den beiden Klemmplatten 13, 14 geklemmt, die sich bei vertikaler Stellung 18 der Klemmhalterung 9 von oben und unten gleichzeitig zur Mitte aufeinanderzubewegen. Wenn die zusammengeraffte Folienbahn festgeklemmt ist, siehe Klemmstellung 19, Fig. 4 wird die gesamte Klemmhalterung 9 wieder in die horizontale Ruhestellung 23 geschwenkt, siehe Fig. 5. Gleichzeitig wird die zusammengeraffte Folienbahn 7a mittels einer nicht gezeigten Schneidvorrichtung vom fertig gewickelten Ballen 1 abgetrennt.

Für den nächsten Ballen wird der Wickelarm 2 in Drehung, siehe Pfeil versetzt. Zur Freigabe der Folienbahn 7a werden die Klemmplatten 13, 14 während des Wickelns kollisionsungefährdet in die Figur 1 gezeigte Stellung 17 gefahren, wobei die gesamte Klemmhalterung 9 in horizontaler Ruhestellung 23 verbleibt.

Alternativ kann auch nur mit einem Klemmelement gearbeitet werden, das die Folienbahn 7 über ihre ganze Breite, beispielsweise von oben nach unten, zusammengerafft und auf einen unteren Anschlag festklemmt und abschneidet.

## Patentansprüche

1. Vorrichtung zum Umwickeln von Körpern (1) mit einer Folienbahn (7), bestehend aus wenigstens einem im oberen Bereich eines Tragrahmens (4) gelagerten, rotierend antreibbaren Wickelarm (2), welcher an seinem Armende eine Folienvorratsrolle (6) trägt und einer am Tragrahmen (21) angeordneten Klemmhalterung (9) für den Anfang der Folienbahn (7a), **dadurch gekennzeichnet, dass** die gesamte Klemmhalterung (9, 12) schwenkbar am Tragrahmen (21) gelagert und erst nach Stillstand des Wickelarmes (2) in den Bereich zwischen Körper (1) und Folienvorratsrolle (6) bewegbar ist.

2. Vorrichtung nach Anspruch 1, **dadurch gekennzeichnet, dass** die Klemmhalterung (9) wenigstens ein gradlinig verschiebbares Klemmelement (13, 14) aufweist.

3. Vorrichtung nach Anspruch 1 oder 2, **dadurch gekennzeichnet, dass** die Klemmhalterung (9) zwei geradlinig verschiebbare Klemmelemente (13, 14) aufweist, die so ausgebildet und angeordnet sind, dass die Folienbahn (7) von oben und unten zur Mitte zusammenraffbar und in der Mitte festklemmbar ist.

4. Vorrichtung nach Anspruch 3, **dadurch gekennzeichnet, dass** die Klemmelemente (13, 14) in vertikaler Stellung (18) der Klemmhalterung (9) einen Abstand voneinander aufweisen, der größer ist als die Breite der Folienbahn (7).

5. Vorrichtung nach Anspruch 4, **dadurch gekennzeichnet, dass** die Klemmelemente (13, 14) als Klemmplatten ausgebildet sind, die in vertikaler Stellung der Klemmhalterung (9) die Folienbahn (7) oben und unten übergreifen und in zusammengefahrener Klemmstellung (19) die zusammengeraffte Folienbahn (7) festklemmen.

6. Vorrichtung nach einem oder mehreren der vorhergehenden Ansprüche, **dadurch gekennzeichnet, dass** der Klemmhalterung (9) wenigstens ein Abweiselement zugeordnet ist.

7. Vorrichtung nach einem oder mehreren der vorhergehenden Ansprüche, **dadurch gekennzeichnet, dass** wenigstens eine Klemmhalterung (9) in Drehrichtung (24) des Wickelarmes (2) gegen die dem Körper (1) abgewandte Seite der Folienbahn (7) verschwenkbar ist.

8. Vorrichtung nach einem oder mehreren der vorhergehenden Ansprüche, **dadurch gekennzeichnet, dass** zur Betätigung der Klemmhalterung (9) mechanische, hydraulische, elektrische und/ oder pneumatische Stellantriebe (10, 11) vorgesehen sind.

9. Vorrichtung nach einem der Ansprüche 1 bis 8, **dadurch gekennzeichnet, dass** eine Steuereinrichtung vorgesehen ist, die nach Abschluss des Wickelvorgangs den Wickelarm (2) stoppt, anschließend die Klemmhalterung (9) in eine vertikale Stellung (18) fährt, dann die Folienbahn durch Verschieben eines oder mehrerer Klemmelemente (13, 14) festklemmt und dann die Klemmhalterung (9) in eine horizontale Ruhestellung (23) absenkt und welche zur Freigabe der geklemmten Folienbahn (7) für den nächsten Wickelvorgang die Klemmelemente (13, 14) in der horizontalen Ruhestellung (23) der Klemmhalterung (9) auseinanderfährt.

10. Vorrichtung nach einem oder mehreren der vorhergehenden Ansprüche, **dadurch gekennzeichnet, dass** der Klemmhalterung (9) ein Schneidelement zugeordnet ist, welches die festgeklemmte Folienbahn (7) in der vertikalen Arbeitsstellung (18) der Klemmhalterung (9) oder spätestens in der horizontalen Ruhestellung (23) abtrennt.

## Claims

1. A device for wrapping a film web (7) around bodies (1), consisting of at least one wrapping arm (2), mounted in the upper region of a supporting frame (4) and drivable in rotation, which bears a film supply roll (6) at its arm end and of a clamping holder (9), arranged on the supporting frame (21), for the leading end of the film web (7a), **characterised in that** the entire clamping holder (9, 12) is pivotably mounted on the supporting frame (21) and is not movable into the region between the body (1) and the film supply roll (6) until after the wrapping arm (2) is at a standstill.

2. A device according to claim 1, **characterised in that** the clamping holder (9) has at least one rectilinearly displaceable clamping element (13, 14).

3. A device according to claim 1 or 2, **characterised in that** the clamping holder (9) has two rectilinearly displaceable clamping elements (13, 14) which are designed and arranged in such a manner that the film web (7) is gatherable together towards the centre from the top and the bottom and firmly clampable in the centre.

4. A device according to claim 3, **characterised in that** when the clamping holder (9) is in a vertical position (18), the clamping elements (13, 14) are at a distance from one another which is greater than the width of the film web (7).

5. A device according to claim 4, **characterised in that** the clamping elements (13, 14) are in the form of clamping plates which, when the clamping holder (9) is in a vertical position, engage over the film web (7) from above and below and, in the moved-together clamping position (19), firmly clamp the gathered together film web (7).

6. A device according to one or more of the preceding claims, **characterised in that** at least one deflector element is associated with the clamping holder (9).

7. A device according to one or more of the preceding claims, **characterised in that** at least one clamping holder (9) is pivotable, in the rotational direction (24) of the wrapping arm (2), so as to be against that side of the film web (7) remote from the body (1).

8. A device according to one or more of the preceding claims, **characterised in that** mechanical, hydraulic, electrical and/or pneumatic actuating drives (10, 11) are provided to actuate the clamping holder (9).

9. A device according to any one of claims 1 to 8, **characterised in that** a control device is provided which halts the wrapping arm (2) after completion of the wrapping procedure, subsequently conveys the clamping holder (9) into a vertical position (18), then firmly clamps the film web by displacement of one or a plurality of clamping elements (13, 14) and then lowers the clamping holder (9) into a horizontal rest position (23), and which for release of the clamped film web (7) for the next wrapping procedure moves the clamping elements (13, 14) apart in the horizontal rest position (23) of the clamping holder (9).

10. A device according to one or more of the preceding claims, **characterised in that** a cutting element is associated with the clamping holder (9) and severs the firmly clamped film web (7) in the vertical working position (18) of the clamping holder (9) or at the latest in the horizontal rest position (23).

## Revendications

1. Dispositif d'enroulement de corps (1) à l'aide d'une bande de film (7), comprenant au moins un bras d'enroulement (2), monté dans la zone supérieure d'un bâti support (4) et pouvant être entraîné en rotation, qui porte à son extrémité une bobine d'alimentation en film (6), et un support de serrage de la tête de la bande de film (7a) disposé sur le bâti support (21), **caractérisé en ce que** l'ensemble du support de serrage (9, 12) est monté à pivotement sur le bâti support (21) et ne peut être déplacé dans la zone comprise entre le corps (1) et la bobine d'alimentation en film (6) qu'après arrêt du bras d'enroulement (2).

2. Dispositif selon la revendication 1, **caractérisé en ce que** le support de serrage (9) présente au moins un élément de serrage (13, 14) déplaçable de manière rectiligne.

3. Dispositif selon la revendication 1 ou 2, **caractérisé en ce que** le support de serrage (9) présente deux éléments de serrage (13, 14) déplaçables de manière rectiligne, qui sont conçus et disposés de façon que la bande de film (7) puisse être contractée par le haut et par le bas vers le centre et serrée au centre.

4. Dispositif selon la revendication 3, **caractérisé en ce que** les éléments de serrage (13, 14) présentent, en position verticale (18) du support de serrage (9), un écartement mutuel plus grand que la largeur de la bande de film (7).

5. Dispositif selon la revendication 4, **caractérisé en ce que** les éléments de serrage (13, 14) sont conçus sous forme de plaques de serrage qui, en position verticale du support de serrage (9), recouvrent la bande de film (7) en haut et en bas et qui, en position de serrage rapprochée (19), bloquent en position la bande de film (7) contractée.

6. Dispositif selon l'une ou plusieurs des revendications précédentes, **caractérisé en ce qu'**est associé au support de serrage (9) au moins un élément déflecteur.

7. Dispositif selon l'une ou plusieurs des revendications précédentes, **caractérisé en ce qu'**au moins un support de serrage (9) est apte à pivoter dans la direction de rotation (24) du bras d'enroulement (2) vers la face de la bande de film (7) opposée au corps (1).

8. Dispositif selon l'une ou plusieurs des revendications précédentes, **caractérisé en ce que** sont prévus, pour actionner le support de serrage (9), des actionneurs (10, 11) mécaniques, hydrauliques, électriques et/ou pneumatiques.

9. Dispositif selon l'une des revendications 1 à 8, **caractérisé en ce qu'**est prévu un dispositif de commande qui stoppe le bras d'enroulement après la fin du processus d'enroulement, puis amène le support de serrage (9) en position verticale (18) et ensuite serre la bande de film par déplacement d'un ou plusieurs éléments de serrage (13, 14) et ensuite abaisse le support de serrage (9) dans une position de repos horizontale (23), et qui, pour libérer la bande de film (7), en position serrée, pour l'opération d'enroulement suivante, écarte les éléments de serrage (13, 14) dans la position de repos horizontale (23) du support de serrage (9).

10. Dispositif selon l'une ou plusieurs des revendications précédentes, **caractérisé en ce qu'**est associé au support de serrage (9) un élément de coupe qui découpe la bande de film serrée dans la position de travail verticale du support de serrage (9) ou au plus tard dans la position de repos horizontale.
